# EUROPÄISCHE PATENTSCHRIFT

(11) **EP 3 956 189 B1**
(45) Veröffentlichungstag und Bekanntmachung des Hinweises auf die Patenterteilung: **28.02.2024**
(21) Anmeldenummer: 20720362.1
(22) Anmeldetag: 03.04.2020
(51) Int. Cl.: B60T 8/172, B60T 17/22

(54) **VERFAHREN ZUM BETRIEB EINES FAHRZEUG-BREMSSYSTEMS UND BREMSSYSTEM**
METHOD FOR OPERATING A VEHICLE BRAKE SYSTEM, AND BRAKE SYSTEM
PROCÉDÉ SERVANT À FAIRE FONCTIONNER UN SYSTÈME DE FREINAGE DE VÉHICULE, ET SYSTÈME DE FREINAGE

(30) Priorität: 18.04.2019 US 201962835865 P; 23.04.2019 DE 102019205785
(43) Veröffentlichungstag der Anmeldung: 23.02.2022
(73) Patentinhaber: Continental Automotive Technologies GmbH, 30165 Hannover (DE)
(72) Erfinder: GUNSELMANN, Christian, 60488 Frankfurt am Main (DE); RODATOS, Alexander, 60488 Frankfurt am Main (DE); HORSTMANN, Nils, 60488 Frankfurt am Main (DE); ABEDINI BAYGHRA, Farid, 60488 Frankfurt am Main (DE); KATCHAN, Roman, 60488 Frankfurt am Main (DE); JUNG, Lukas, 60488 Frankfurt am Main (DE); SMITH, Scott R., 60488 Frankfurt am Main (DE)
(74) Vertreter: Continental Corporation
(86) Internationale Anmeldenummer: PCT/EP2020/059476
(87) Internationale Veröffentlichungsnummer: WO 2020/212162

(56) Entgegenhaltungen:
- DE-A1-102011 103 660
- DE-A1-102016 007 436
- DE-A1-102016 221 939
- DE-A1-102016 222 504

## Beschreibung

Die Erfindung betrifft ein Verfahren zum Betrieb eines Fahrzeug-Bremssystems und ein Bremssystem für ein Kraftfahrzeug.

Kraftfahrzeuge, die mit einem elektrischen Antrieb, der auch als rekuperative Bremse betrieben werden kann, und einer Reibbremsanlage mit Reibungsbremsen ausgestattet sind, können eine angeforderte Fahrzeugverzögerung (Bremsvorgang) unter anderem durch zwei verschiedene Verfahren ausführen:
Durch Betrieb des elektrischen Antriebs als Generator (rekuperative Bremse) wird die kinetische Energie des Fahrzeugs zumindest teilweise in elektrische Energie umgewandelt. Die elektrische Energie wird vorzugsweise in einem Energiespeicher (z.B. einer Batterie) gespeichert, und/oder in thermische Energie umgewandelt. Durch die Betätigung der Reibbremsanlage (Reibungsbremse, beispielsweise Scheiben- oder Trommelbremsen) wird hingegen die kinetische Energie aufgrund von Reibung zwischen entsprechenden Reibpartnern in thermische Energie umgewandelt.

Das rekuperative Bremsen wird dabei üblicherweise bevorzugt verwendet, da hierbei sowohl der Kraftstoffverbrauch des Fahrzeugs gesenkt, als auch der Verschleiß der Reibbremsanlage reduziert werden kann.

Würde man die rekuperative Bremse grundsätzlich bevorzugt gegenüber den Reibungsbremsen verwenden, hätte das zur Folge, dass sich die Wirksamkeit der Reibbremsanlage verschlechtern würde, beispielsweise aufgrund von Korrosion. Dies hätte unter anderem akustische Auffälligkeit (z.B. Quietschen der Bremse) als unerwünschte Auswirkung.

Eine weitere Folge einer Bevorzugung der rekuperativen Bremse gegenüber der Reibungsbremse kann ferner eine reduzierte Bremswirkung, insbesondere in der unmittelbaren Zeit nach der Betätigung, sein. Dies ist für den Fahrer in Form von Verzögerungsschwankungen spürbar, z. B. wenn die Bremsanlage während eines Bremsvorgangs die Verzögerung von einem rekuperativen Bremsen zur Verwendung der Reibungsbremse überführen (blenden) muss (z. B. wenn die Verzögerungswirkung des elektrischen Antriebs bei geringen Geschwindigkeiten nicht mehr ausreichend ist).

Aus diesem Grund ist es bekannt, nach einem fest vorgegebenem, regelmäßigen Aktivierungsmuster die Aktivierung der Reibungsbremse zur Verzögerung des Fahrzeugs vorzusehen. Dadurch wird sichergestellt, dass bereits vor einer spürbaren Verschlechterung (z. B. bei einer Scheibenbremse durch Korrosion von Bremsbelägen und/oder der Bremsscheibe) durch die Betätigung selbst der gewünschte Zustand durch eine Selbstreinigung der Reibungsbremse wiederhergestellt wird.

Das vorgegebene Aktivierungsmuster für die Aktivierung der Reibungsbremse wird dabei vorzugsweise so festgelegt, dass in jedem Fall eine Verschlechterung der Reibbremswirkung verhindert wird. Dabei werden für die Festlegung des Aktivierungsmusters häufig strenge Randbedingungen angenommen, die zu einer starken bzw. schnellen Verschlechterung der Bremswirkung führen. Viele Fahrten werden jedoch unter günstigeren Randbedingungen stattfinden. Daraus resultiert, dass bei vielen Fahrten häufiger mittels der Reibungsbremse gebremst wird als es für einen geringen Kraftstoffverbrauch und/oder einen niedrigen Verschleiß der Reibbremsanlage sinnvoll und zur Vermeidung einer Verschlechterung der Bremswirkung notwendig wäre.

Exemplarisch wird hier auf die DE 10 2016 221 939 A1 verwiesen, aus der ein Verfahren zum Betreiben eines Bremssystems eines Kraftfahrzeugs bekannt ist, das eine zum rekuperativen Verzögern des Kraftfahrzeugs ausgelegte Antriebseinrichtung sowie eine wenigstens einem Rad des Kraftfahrzeugs zugeordnete Betriebsbremseinrichtung aufweist.

Der vorliegenden Erfindung liegt nun die Aufgabe zugrunde, ein verbessertes Verfahren zum Betrieb eines Fahrzeug-Bremssystems mit wenigstens einer rekuperativen Bremse und wenigstens einer Reibungsbremse und ein verbessertes Bremssystem für ein Fahrzeug mit wenigstens einer rekuperativen Bremse und wenigstens einer Reibungsbremse bereitzustellen.

Diese Aufgabe wird mit dem Verfahren gemäß Anspruch 1 und dem Bremssystem gemäß Anspruch 16 gelöst. Bevorzugte Ausgestaltungen der Erfindung sind in den abhängigen Ansprüchen angegeben.

In einem ersten Aspekt betrifft die Erfindung ein Verfahren zum Betrieb eines Fahrzeug-Bremssystems, wobei das Bremssystem wenigstens eine Reibungsbremse und wenigstens eine rekuperative Bremse aufweist. Dabei ist ein definiertes Umschaltmuster zum Umschalten zwischen einer Selbstreinigungs-Betriebsart zur Reinigung der Reibungsbremse und einer Normalbetriebsart des Bremssystems vorgegeben. Das Verfahren weist das Ermitteln von den Zustand der wenigstens einen Reibungsbremse beschreibenden Informationen, das Ermitteln des Zustands der wenigstens einen Reibungsbremse aus den Informationen, das Ermitteln, ob der Zustand ein bestimmtes Umschaltkriterium erfüllt, und wenn die Selbstreinigungs-Betriebsart nach dem Umschaltmuster zu aktivieren ist und der Zustand der Reibungsbremse das Umschaltkriterium nicht erfüllt, das Unterdrücken der Aktivierung der Selbstreinigungs-Betriebsart und Beibehalten der Normalbetriebsart.

Dabei ist vorzugsweise vorgesehen, dass das Bremssystem nach erfolgter Reinigung der Reibungsbremse in der Selbstreinigungs-Betriebsart wieder in die Normalbetriebsart übergeht. Die Durchführung des Verfahrens kann dabei beispielsweise infolge einer empfangenen Bremsanforderung durch den Fahrzeugführer oder eine Fahrfunktion ausgelöst werden.

Unter einer "rekuperativen Bremse" wird dabei jede Art von Verzögerungseinrichtung verstanden, bei der durch entsprechende Ansteuerung eines elektrischen Antriebsmotors des Fahrzeugs und/oder dessen Peripherie der elektrische Antriebsmotor ein Verzögerungsmoment auf ein Rad oder mehrere Räder des Fahrzeugs bewirkt und gleichzeitig wenigstens einen Teil der so gewonnenen kinetischen Energie in elektrische Energie zur Aufladung einer Energiequelle des Fahrzeugs oder in thermische Energie umwandelt. Dabei kann eine rekuperative Bremse sowohl einen einzelnen elektrischen Antriebsmotor aufweisen, der mit einem oder mehreren Rädern des Fahrzeugs verbunden ist, als auch eine Vielzahl von elektrischen Antriebsmotoren, die jeweils mit wenigstens einem Rad des Fahrzeugs verbunden sind. Insbesondere kann eine rekuperative Bremse auch dergestalt ausgebildet sein, dass an jedem Rad ein radindividueller elektrischer Antrieb angeordnet ist.

Unter einem "Umschaltmuster" ist dabei eine Vorschrift zu verstehen, die Mindestanforderungen für die Betätigung der Reibungsbremse definiert, um einer Degradation der Reibungsbremse hinsichtlich der verfügbaren Verzögerungswirkung vorzubeugen. Das vorzugsweise regelmäßige Umschaltmuster ist dabei beispielsweise so gewählt, dass unter gewöhnlichen Bedingungen die Selbstreinigung-Betriebsart der Reibungsbremse immer dann aktiviert wird, wenn rein statistisch davon auszugehen ist, dass eine Reinigung der Reibungsbremse, bspw. aufgrund von Korrosion oder sonstiger Verunreinigung, notwendig ist.

Durch die Selbstreinigungs-Betriebsart ist vorzugsweise vorgegeben, mit welchen Parametern die Reibungsbremse zu aktivieren ist, sodass bei einer Verzögerung des Fahrzeugs ein möglichst starker Reinigungseffekt der Reibungsbremse erzielt wird. Beispielsweise kann ein solcher Parameter ein einzustellender Mindestdruck für eine definierte Dauer sein, sodass bei einer Verzögerung mit solchen Parametern davon ausgegangen werden kann, dass die Reibungsbremse nach der Verzögerung gereinigt ist. Hierzu kann ferner auch ein Energieeintrag in die Reibungsbremse während der Verzögerung herangezogen werden. Werden die vorgegebenen Parameter bei der Verzögerung des Fahrzeugs infolge einer Bremsanforderung nicht erreicht, kann vorgesehen sein, dass für nachfolgende Bremsanforderungen so lange weiter die Reibungsbremse gemäß der Selbstreinigungs-Betriebsart zur Fahrzeugverzögerung eingesetzt wird, bis die geforderten Parameter erfüllt wurden, die Reibungsbremse also als gereinigt betrachtet werden kann. Erst dann geht das Bremssystem wieder in die Normalbetriebsart über, in der das Verzögerungsmoment so zwischen Reibungsbremsen und rekuperativen Bremsen aufgeteilt wird, dass ein möglichst energieeffizienter Betrieb erreicht wird.

Das erfindungsgemäße Verfahren sieht demnach vor, dass durch die gezielte Überwachung des Zustands der Reibungsbremse anhand von entsprechenden Zustandsinformationen geprüft werden kann, ob eine nach dem Umschaltmuster vorgesehene Aktivierung einer Selbstreinigungs-Betriebsart für die Reibungsbremse überhaupt notwendig ist. Je nach ermitteltem Zustand der Bremse wird dann entweder die Aktivierung der Selbstreinigungs-Betriebsart der Reibungsbremse, wie sie gemäß dem Umschaltmuster vorgesehen ist, durchgeführt, oder die Aktivierung des Selbstreinigungs-Betriebsart wird unterdrückt. Dies hat den Vorteil, dass eine Verwendung der Reibungsbremse im Rahmen der Selbstreinigungs-Betriebsart und mithin ein entsprechender Verschleiß der Reibpartner und Verlust an thermischer Energie, welcher zwar aufgrund des Umschaltmusters vorgesehen, aber aufgrund des Zustands der Reibungsbremse an sich nicht notwendig ist, vermieden werden kann. So kann die Effizienz der Rekuperation von Bremsenergie gesteigert und der Verschleiß der Reibungsbremse reduziert werden. Das Unterdrücken der Aktivierung der Selbstreinigungs-Betriebsart wird dabei bevorzugt durch ein Steuergerät des Bremssystems durchgeführt.

Dabei ist die rekuperative Bremse des Fahrzeugs vorzugsweise dazu ausgebildet, bei einer Verzögerung des Fahrzeugs rekuperierte Energie in eine Energiequelle (Traktionsbatterie) des Fahrzeugs zu übertragen. Weiter kann die rekuperative Bremse auch dazu ausgebildet sein, bei einer Verzögerung des Fahrzeugs rekuperierte Energie in thermische Energie umzuwandeln. Dies kann beispielsweise notwendig werden, wenn der Energiequelle des Fahrzeugs keine weitere Energie zugeführt werden kann, sodass die bei der Verzögerung des Fahrzeugs gewonnene Energie auf andere Weise abgeführt werden muss.

Das Fahrzeug weist bevorzugt wenigstens zwei, insbesondere jedoch vier Reibungsbremsen auf. Dabei ist nach Ausgestaltungen der Erfindung vorgesehen, dass wenigstens eines der Räder des Fahrzeugs, insbesondere alle Räder einer Achse, insbesondere alle Räder sowohl mittels einer rekuperative Bremse, als auch mittels einer Reibungsbremse verzögert werden können. Es kann jedoch auch vorgesehen sein, dass die Räder einer Vorderachse des Fahrzeugs oder Räder einer Hinterachse des Fahrzeugs ausschließlich durch jeweils eine Reibungsbremse verzögert werden.

Nach einer Ausführungsform ist dabei vorgesehen, dass die Selbstreinigungs-Betriebsart ein fest vorgegebenes Verhältnis zwischen einem durch die Reibungsbremse aufgebrachten Verzögerungsmoment und einem durch die rekuperative Bremse aufgebrachten Verzögerungsmoment zur Verzögerung des Fahrzeugs vorgibt. So kann beispielsweise vorgesehen sein, dass in der Selbstreinigungs-Betriebsart stets das insgesamt notwendige Verzögerungsmoment zur Umsetzung eines Bremswunsches zu gleichen Teilen oder mit einem anderen fest definierten Verhältnis durch die Reibungsbremse und die rekuperative Bremse aufzubringen ist. Dabei ist das fest definierte Verhältnis bevorzugt unabhängig von dem ermittelten Zustand der Bremse und wird bei jeder Aktivierung der Reibungsbremse im Rahmen der Selbstreinigungs-Betriebsart nach dem Umschaltmuster gleichermaßen angewendet.

Es kann allerdings auch vorgesehen sein, dass in der Selbstreinigungs-Betriebsart zum Verzögern des Fahrzeugs ausschließlich die Reibungsbremse verwendet wird. Weiter kann durch die Selbstreinigungs-Betriebsart auch definiert sein, wie lange ein derartiger Betrieb aufrechterhalten werden soll. Dabei kann die Dauer rein zeitlich, oder auch durch einen notwendigen Energieeintrag in die Reibungsbremse vorgegeben sein.

Nach einer weiteren Ausführungsform ist ferner vorgesehen, dass das Umschaltmuster einen zeitlichen Abstand zwischen aufeinanderfolgenden Aktivierungen der Selbstreinigungs-Betriebsart festlegt. So kann beispielsweise vorgesehen sein, dass nach einer erfolgten Aktivierung der Selbstreinigungs-Betriebsart und einer entsprechenden Reinigung der Reibungsbremse nach 2 Stunden eine nachfolgende Aktivierung der Selbstreinigungs-Betriebsart erfolgen soll. Die entsprechende Zeitspanne richtet sich dabei vorzugsweise nach der tatsächlichen Betriebsdauer des Fahrzeugs.

Ferner ist nach einer weiteren Ausführungsform vorgesehen, dass das Umschaltmuster eine maximale Anzahl von Bremsvorgängen zwischen aufeinanderfolgenden Aktivierungen der Reibungsbremse vorgibt. Dieser Ansatz ist analog zu dem zuvor beschriebenen Umschaltmuster mit definierten Zeitspannen zu verstehen, wobei hier lediglich anstelle einer Zeitspanne eine Zahl von Bremsvorgängen betrachtet wird. So kann beispielsweise vorgesehen sein, dass spätestens für jeden dritten Bremsvorgang eine Aktivierung der Selbstreinigungs-Betriebsart für die Reibungsbremse erfolgen soll.

Insbesondere kann auch vorgesehen sein, dass das Umschaltmuster eine Kombination aus einer maximalen Anzahl von Bremsvorgängen und einem maximalen zeitlichen Abstand zwischen aufeinanderfolgenden Aktivierungen der Selbstreinigungs-Betriebsart vorgibt. Je nachdem, welches Kriterium früher eintritt, wird eine entsprechende Aktivierung der Selbstreinigungs-Betriebsart vorgesehen. Dies ist insbesondere vorteilhaft, da je nach Fahrprofil (Autobahn, Stadtverkehr, Landstraße) die Zahl der Bremsvorgänge und der zeitliche Abstand zwischen den Bremsvorgängen sehr unterschiedlich ausfallen kann.

Nach einer weiteren Ausführungsform ist weiter vorgesehen, dass das Umschaltmuster von Umweltbedingungen im Bereich des Fahrzeugs abhängt. So kann beispielsweise vorgesehen sein, dass eine Aktivierung der Selbstreinigungs-Betriebsart zur Reinigung der Reibungsbremse häufiger vorgesehen ist, wenn im Umfeld des Fahrzeugs Niederschlag oder Salznebel festgestellt wurde, während bei trockenen und/oder heißen Bedingungen die Aktivierungen eher seltener vorgesehen werden. Ferner können auch Informationen aus einem Licht- oder Regensensor des Fahrzeugs herangezogen werden.

Die Prüfung, ob die Selbstreinigungs-Betriebsart nach dem Umschaltmuster zu aktivieren ist und ob der Zustand der Reibungsbremse das Umschaltkriterium erfüllt, wird vorzugsweise insbesondere dann durchgeführt, wenn eine Bremsanforderung durch den Fahrzeugführer, oder eine Fahrfunktion des Fahrzeugs, beispielsweise einen Bremsassistent, ausgelöst wurde.

Das Ermitteln der den Zustand der Reibungsbremse beschreibenden Informationen kann dabei fortlaufend, insbesondere in festgelegten Intervallen erfolgen, oder kann durch bestimmte Ereignisse im Fahrzeug ausgelöst werden. Gleichermaßen kann der Zustand der Reibungsbremse sowohl fortlaufend, als auch situationsabhängig aus den Informationen ermittelt werden.

Wie zuvor bereits ausgeführt wurde, ist ein im Rahmen des erfindungsgemäßen Verfahrens vorgesehen, dass der Zustand der Reibungsbremse anhand entsprechender Zustandsinformationen ermittelt wird. Dabei wird der Zustand der Reibungsbremse bevorzugt kontinuierlich ermittelt, vorzugsweise durch ein Steuergerät des Bremssystems. Dabei wird beispielsweise der Korrosions-Zustand der Bremsbeläge und/oder der Bremsscheibe der Reibungsbremse ausgewertet. Dazu werden vorzugsweise relevante, den Zustand der Reibungsbremse direkt oder indirekt beschreibende Informationen ausgewertet, die einen Einfluss auf die Verschlechterung der Wirksamkeit der Reibungsbremse bezüglich deren Verzögerungswirkung haben.

Der Zustand der Reibungsbremse kann dabei anhand von unterschiedlichen Größen und Werten quantifiziert werden. Hierzu ist nach einer Ausführungsform vorgesehen, dass der Zustand der Reibungsbremse ein Maß für die Beeinträchtigung einer Verzögerungswirkung der Reibungsbremse bei einer Verzögerung des Fahrzeugs durch die Reibungsbremse angibt.

Dementsprechend ist nach einer weiteren Ausführungsform vorgesehen, dass das Umschaltkriterium eine Mindestverzögerungswirkung einer Reibungsbremse angibt. Wird demnach bei der Ermittlung des Zustands der Reibungsbremse festgestellt, dass eine erforderliche Mindestverzögerungswirkung der Reibungsbremse nicht mehr gegeben ist, wird anschließend gemäß dem Umschaltmuster die Selbstreinigungs-Betriebsart aktiviert.

Die Genauigkeit der Ermittlung des Zustands der Reibungsbremse wird nach einer weiteren Ausführungsform dadurch verbessert, dass bei dem Ermitteln des Zustands der Reibungsbremse Wetterinformationen im Bereich des Fahrzeugs, insbesondere eine Umgebungstemperatur und/oder eine Niederschlagsinformation, berücksichtigt werden.

Zur Bestimmung derartiger Wetterinformationen ist nach einer weiteren Ausführungsform vorgesehen, dass die Wetterinformationen durch wenigstens einen Sensor, insbesondere einen Regensensor und/oder einen Temperatursensor und/oder einen Helligkeitssensor (Lichtsensor), des Fahrzeugs ermittelt werden.

Ferner ist nach einer weiteren Ausführungsform vorgesehen, dass die Wetterinformationen aus Informationsquellen außerhalb des Fahrzeugs ermittelt werden, insbesondere aus dem Internet. So können beispielsweise Wetterdaten, die aus Umgebungssensoren des Fahrzeugs gewonnen wurden, plausibilisiert werden.

Neben der Berücksichtigung von Wetterinformationen zur Bestimmung des Zustands der Reibungsbremse ist nach einer weiteren Ausführungsform vorgesehen, dass es sich bei den den Zustand der Reibungsbremse beschreibenden Informationen um einen Energieeintrag über eine definierte Zeitspanne in wenigstens einen der Reibpartner der Reibungsbremse handelt. Anhand des Energieeintrags in die Reibungsbremse kann mit großer Zuverlässigkeit abgeschätzt werden, ob die Reibungsbremse durch vorangegangene Bremsvorgänge hinreichend stark gereinigt wurde und folglich eine Aktivierung der Selbstreinigungs-Betriebsart gemäß Umschaltmuster unterdrückt werden kann.

Dabei wird die definierte Zeitspanne vorzugsweise ab der letzten Aktivierung der Selbstreinigungs-Betriebsart bestimmt.

Eine weitere Möglichkeit zur Quantifizierung des Zustands der Reibungsbremse wird nach einer weiteren Ausführungsform dadurch genutzt, dass es sich bei den den Zustand der Reibungsbremse beschreibenden Informationen um eine Fahrzeuggeschwindigkeit und/oder eine Fahrzeugverzögerung und/oder eine Steigung der Fahrbahn im Bereich des Fahrzeugs und/oder eine Zeitspanne seit der letzten Aktivierung der Selbstreinigungs-Betriebsart handelt.

Der Zustand der Reibungsbremse wird dabei vorzugsweise für die einzelnen Reibungsbremsen individuell ermittelt. Alternativ kann auch vorgesehen sein, dass der Zustand der Reibungsbremsen achsweise ermittelt wird.

Nach einer bevorzugten Ausführungsform ist dabei vorgesehen, dass für jede Reibungsbremse individuell geprüft wird, ob die Selbstreinigungs-Betriebsart nach dem Umschaltmuster zu aktivieren ist. Alternativ kann der Verarbeitungsaufwand des Verfahrens nach einer weiteren Ausführungsform dadurch reduziert werden, dass für die Reibungsbremsen einer Fahrzeugsachse gemeinsam geprüft wird, ob die Selbstreinigungs-Betriebsart nach dem Umschaltmuster zu aktivieren ist.

Nach einer weiteren Ausführungsform ist ferner vorgesehen, dass, wenn für eine Reibungsbremse oder für die Reibungsbremsen einer Achse nach dem Umschaltmuster die Selbstreinigungs-Betriebsart zu aktivieren ist und der Zustand der Reibungsbremsen das Umschaltkriterium nicht erfüllt, das Unterdrücken der Aktivierung der Selbstreinigungs-Betriebsart radindividuell oder achsweise erfolgt.

In einem weiteren Aspekt betrifft die Erfindung ein Bremssystem für ein Kraftfahrzeug, wobei das Bremssystem wenigstens eine Reibungsbremse und wenigstens eine rekuperative Bremse aufweist. Dabei ist ein definiertes Umschaltmuster zum Umschalten zwischen einer Selbstreinigungs-Betriebsart zur Reinigung der Reibungsbremse und einer Normalbetriebsart des Bremssystems vorgegeben. Das Bremssystem weist hierbei ein Steuergerät aufweist, das dazu ausgebildet ist, den Zustand der wenigstens einen Reibungsbremse beschreibende Informationen zu ermitteln, den Zustand der wenigstens einen Reibungsbremse aus den Informationen zu ermitteln, zu ermitteln, ob der Zustand ein bestimmtes Umschaltkriterium erfüllt, und wenn die Selbstreinigungs-Betriebsart nach dem Umschaltmuster zu aktivieren ist und der Zustand der Reibungsbremse das Umschaltkriterium nicht erfüllt, die Aktivierung der Selbstreinigungs-Betriebsart zu unterdrücken und die Normalbetriebsart beizubehalten.

Im Folgenden werden bevorzugte Ausgestaltungen der Erfindung anhand der Zeichnungen näher erläutert. Dabei zeigen:
- Figur 1: ein Flussdiagramm eines beispielsgemäßen Verfahrens, und
- Figur 2: eine schematische Darstellung des zeitlichen Verlaufs eines Umschaltmusters.

Im Folgenden werden einander ähnliche oder identische Merkmale mit denselben Bezugszeichen gekennzeichnet.

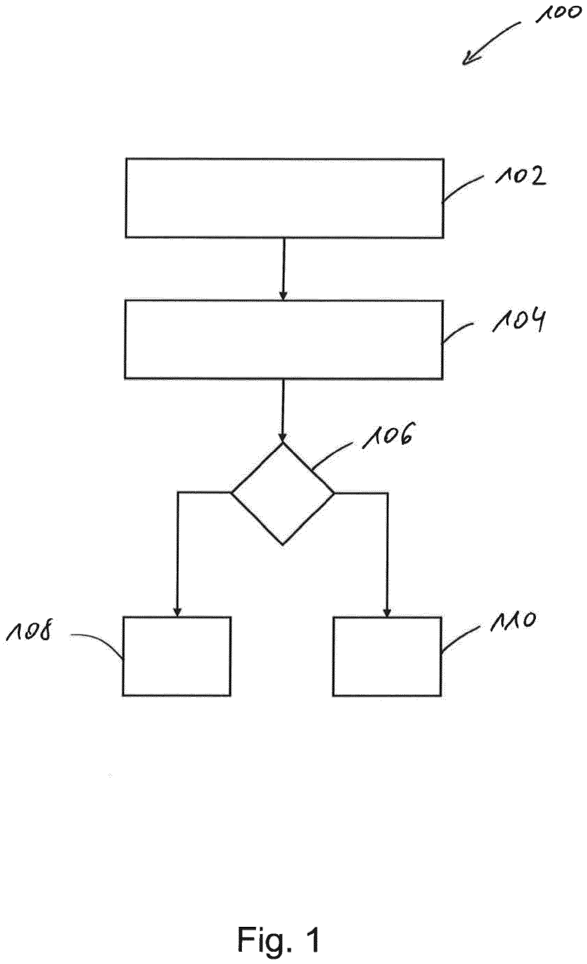

Die Figur 1 zeigt ein Flussdiagramm eines beispielsgemäßen Verfahrens 100 zum Betrieb eines Fahrzeug-Bremssystems. Das Fahrzeug-Bremssystem ist dabei beispielsweise in einem Fahrzeug mit vier Rädern eingesetzt, wobei beispielsweise jedes Rad des Fahrzeugs eine Reibbremse und eine rekuperative Bremse aufweist. Alternativ kann auch vorgesehen sein, dass nur eine Teilmenge der Räder mit Reibungsbremsen oder rekuperativen Bremsen ausgestattet ist. Das nachfolgend beschriebene Verfahren bleibt davon im Wesentlichen unberührt.

Bei einer Reibungsbremse handelt es sich beispielsweise um eine Scheibenbremse, bei der in einem Bremssattel angeordnete Reibbelägen im Verzögerungsfall mit einer definierten Zuspannkraft auf die Bremsscheibe gepresst werden, sodass auf die Bremsscheibe und mithin auf das entsprechende Fahrzeugrad ein Verzögerungsmoment wirkt. Die Zuspannkraft kann dabei sowohl hydraulisch, als auch elektromechanisch bereitgestellt werden.

Die rekuperative Bremse eines Rades kann beispielsweise dadurch realisiert sein, dass ein elektromotorischer Antrieb mit dem Rad verbunden ist, wobei der Antrieb dazu ausgebildet ist, in einem Generatorbetrieb kinetische Rotationsenergie des Rades in elektrische oder thermische Energie umzuwandeln und hierbei ein Verzögerungsmoment auf das Rad zu bewirken.

Ausgehend von dieser Infrastruktur wird im Folgenden eine beispielhafte Ausgestaltung des erfindungsgemäßen Verfahrens erläutert.

Dabei werden in einem ersten Verfahrensschritt 102 zunächst Informationen ermittelt, die den Zustand wenigstens einer Reibungsbremse des Fahrzeugs beschreiben. Dabei kann es sich beispielsweise um Umweltdaten, wie eine Umgebungstemperatur, Informationen eines Licht- oder Regensensors, oder Wetterdaten aus externen Quellen (Internet) handeln. Ferner können auch Informationen berücksichtigt werden, die sich auf die vorangegangenen Betätigungen der Reibungsbremse beziehen. Hier kann beispielsweise eine verstrichene Zeit seit der letzten Betätigung der Reibungsbremse, ein Energieeintrag in die Reibungsbremse bei vorangegangenen Bremsmanövern, ein bei vorangegangenen Bremsmanövern angelegter Bremsdruck bzw. eine entsprechende Bremsdauer, eine bei der Bremsung gemessene Fahrzeuggeschwindigkeit, oder eine durch das Bremsmanöver erreichte Fahrzeugverzögerung einfließen.

Ausgehend von diesen Informationen wird in einem nachfolgenden Schritt 104 der Zustand wenigstens einer Reibungsbremse des Fahrzeugs ermittelt. Der Zustand der Reibungsbremse kann beispielsweise eine verbleibende Verzögerungswirkung der Reibungsbremse unter der Annahme angeben, dass sich zwischenzeitlich eine gewisse Menge an Verunreinigungen oder Rost auf der Oberfläche der Bremsscheibe angesammelt haben.

Die Schritte 102 und 104 können dabei bevorzugt fortlaufend wiederholt werden, sodass permanent der Zustand der Reibungsbremse bekannt ist.

Nachdem in Schritt 104 der Zustand der Reibungsbremse ermittelt wurde, wird anschließend in Schritt 106 überprüft, ob der Zustand der Reibungsbremse ein definiertes Umschaltkriterium erfüllt, das durch ein entsprechendes Umschaltmuster zum Umschalten zwischen einer Selbstreinigungs-Betriebsart zur Reinigung der Reibungsbremse und einer Normalbetriebsart des Bremssystems vorgegeben ist. Das Umschaltkriterium kann beispielsweise darin bestehen, dass die Selbstreinigungs-Betriebsart nach dem Umschaltmuster zu aktivieren ist, wenn die Verzögerungswirkung der Reibungsbremse unter einen definierten Schwellenwert gefallen ist.

Die Prüfung gemäß Schritt 106 kann dabei sowohl fortlaufend erfolgen, als auch nur nach Bedarf, beispielsweise sobald nach dem Umschaltmuster eine Aktivierung der Selbstreinigungs-Betriebsart vorgesehen ist.

Wenn dabei nach dem Umschaltmuster eine Aktivierung der Selbstreinigungs-Betriebsart ist und in Schritt 106 erkannt wurde, dass der Zustand der Reibungsbremse das Umschaltkriterium erfüllt, wird anschließend in Schritt 108 die Selbstreinigungs-Betriebsart des Bremssystems aktiviert und bei der Durchführung einer nachfolgenden Bremsanforderung berücksichtigt. Beispielsweise kann dabei vorgesehen sein, dass bei einer nachfolgenden Umsetzung einer Bremsanforderung in der Selbstreinigungs-Betriebsart ausschließlich die Reibungsbremse zu verwenden ist, um das geforderte Verzögerungsmoment zu erzeugen. Alternativ kann vorgesehen sein, dass ein feststehender Anteil des notwendigen Verzögerungsmoments durch die Reibungsbremse aufgebracht werden soll. So kann beispielsweise vorgesehen sein, dass sich die Bremskraft zwischen der Reibungsbremse und der rekuperativen Bremse in der Selbstreinigungs-Betriebsart gleichmäßig aufteilt.

Wird hingegen in Schritt 106 festgestellt, dass der Zustand der Reibungsbremse das Umschaltkriterium nicht erfüllt und ist ferner nach dem Umschaltmuster eine Aktivierung der Selbstreinigungs-Betriebsart vorgesehen, wird in Schritt 110 die vorgesehene Aktivierung der Selbstreinigungs-Betriebsart unterdrückt, bis eine in dem Umschaltmuster vorgesehene, nachfolgende Aktivierung ansteht. Stattdessen werden die Reibungsbremse und die rekuperative Bremse weiterhin in der Normalbetriebsart betrieben und durch ein entsprechendes Steuergerät so angesteuert, dass ein möglichst hoher Anteil der bei einer Verzögerung des Fahrzeugs frei werdenden kinetischen Energie in elektrische Energie umgewandelt und in die Energiequelle des Fahrzeugs eingespeist wird.

Bei Durchführung des Schritts 108, also der Aktivierung der Selbstreinigungs-Betriebsart zur Reinigung der Reibungsbremse, kann dabei durch die Selbstreinigungs-Betriebsart eine Reihe von Kriterien und/oder Parametern vorgegeben sein, ab wann eine Betätigung der Reibungsbremse infolge einer Bremsanforderung ausreicht, dass die Bremse als gereinigt gilt und folglich wieder in die Normalbetriebsart des Bremssystems umgeschaltet werden kann. Beispielsweise kann dabei ein mindestens zu erbringender Energieeintrag in die Bremsscheibe vorgegeben sein, der erfüllt werden muss, sodass die Reibungsbremse infolge ihrer Verwendung als gereinigt gilt.

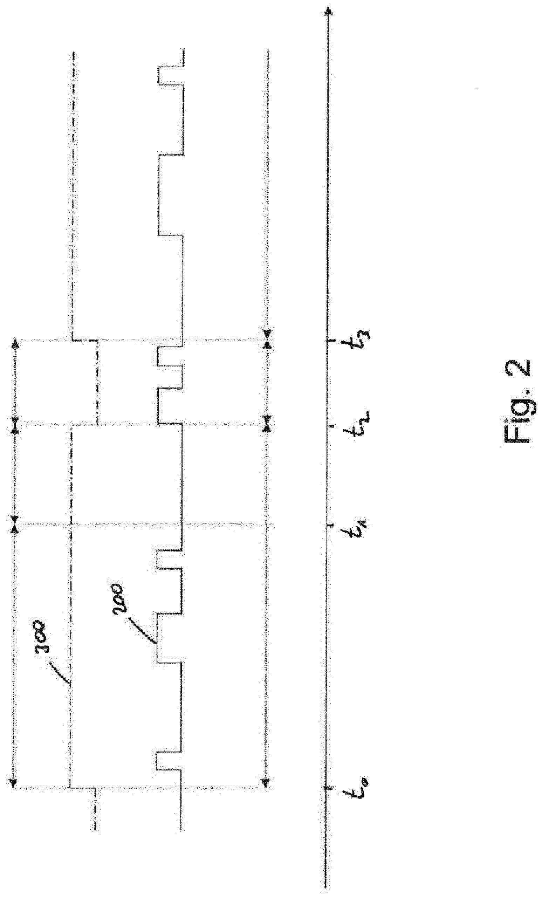

Im Folgenden wird mit Bezug zu Figur 2 exemplarisch der zeitliche Verlauf eines Umschaltens zwischen einer Selbstreinigungs-Betriebsart und einer Normalbetriebsart mit einem entsprechenden Umschaltmuster in Zusammenschau mit entsprechenden Bremsanforderungen beschrieben. Dabei ist auf der horizontalen Achse des Diagramms eine Zeitskala angegeben. Die durchgezogene Linie 200 zeigt an, ob eine Bremsanforderung vorliegt, während die Strichpunktlinie 300 anzeigt, ob das Bremssystem und mithin die Reibungsbremse in der Normalbetriebsart arbeitet, oder ob die Reibungsbremse in einer Selbstreinigungs-Betriebsart arbeitet.

Zu einem ersten Zeitpunkt t₀ schaltet dabei das Bremssystem in die Normalbetriebsart, sodass eingehende Bremsanforderungen vorzugsweise durch Ansteuerung der rekuperativen Bremse umgesetzt werden. Dabei wird die Reibungsbremse üblicherweise nur mit einem geringen Anteil zur Verzögerung des Fahrzeugs eingesetzt, sodass ein möglichst energieeffizienter Betrieb des Fahrzeugs erzielt werden kann. Dabei wird fortlaufend der Zustand der Reibungsbremse anhand entsprechender Zustandsinformationen überwacht.

Zum Zeitpunkt t₁ startet gemäß dem Umschaltmuster ein Zeitfenster, innerhalb dessen eine Aktivierung der Selbstreinigungs-Betriebsart gemäß dem Umschaltmuster vorgesehen ist. Zwischen den Zeitpunkt t₁ und t₂ geht jedoch keine Bremsanforderung ein, sodass das System in einem Wartezustand verharrt und den Betriebszustand zunächst nicht ändert.

Erst zum Zeitpunkt t₂ geht eine Bremsanforderung ein, sodass das erfindungsgemäße Verfahren ausgelöst wird. Da laut Umschaltmuster die Selbstreinigungs-Betriebsart zu aktivieren ist und die Reibungsbremse das Umschaltkriterium erfüllt, schaltet das Bremssystem in die Selbstreinigungs-Betriebsart um. Folglich wird dann dann die Bremsanforderung gemäß der Selbstreinigungs-Betriebsart mit definierten Parametern durch die Reibungsbremse umgesetzt, sodass eine Selbstreinigung der Reibungsbremse erfolgt. Die erste eingehende Bremsanforderung nach dem Zeitpunkt t₂ ist dabei in dem dargestellten Beispiel für eine Selbstreinigung der Reibungsbremse nicht ausreichend. Daher wird die Selbstreinigungs-Betriebsart wenigstens so lange aufrechterhalten, bis eine weitere Bremsanforderung eingeht. Die nachfolgende Bremsanforderung ist dabei hinsichtlich ihrer Dauer und der aufgebrachten Verzögerung ausreichend, sodass davon ausgegangen werden kann, dass die Reibungsbremse nach ihrer Betätigung zur Umsetzung der Bremsanforderung hinreichend gereinigt wurde. Folglich springt das Bremssystem zum Zeitpunkt t₃ wieder in die Normalbetriebsart.

Dabei kann insbesondere vorgesehen sein, dass in dem Zeitraum zwischen t₂ und t₃ bei einer Bremsanforderung ein fest vorgegebener Anteil der durch die Bremsanforderung vorgegebenen Fahrzeugverzögerung bzw. des entsprechenden Bremsmoments durch die Reibungsbremse aufgebracht werden muss.

## Patentansprüche

1. Verfahren zum Betrieb eines Fahrzeug-Bremssystems,
wobei das Bremssystem wenigstens eine Reibungsbremse und wenigstens eine rekuperative Bremse aufweist,
wobei ein definiertes Umschaltmuster zum Umschalten zwischen einer Selbstreinigungs-Betriebsart zur Reinigung der Reibungsbremse und einer Normalbetriebsart des Bremssystems vorgegeben ist, wobei das Verfahren die folgenden Schritte aufweist:
• Ermitteln von den Zustand der wenigstens einen Reibungsbremse beschreibenden Informationen,
• Ermitteln des Zustands der wenigstens einen Reibungsbremse aus den Informationen,
• Ermitteln, ob der Zustand ein bestimmtes Umschaltkriterium erfüllt, **dadurch gekennzeichnet, dass**
• wenn die Selbstreinigungs-Betriebsart nach dem Umschaltmuster zu aktivieren ist und der Zustand der Reibungsbremse das Umschaltkriterium nicht erfüllt, die Aktivierung der Selbstreinigungs-Betriebsart unterdrückt wird und die Normalbetriebsart beibehalten wird.

2. Verfahren nach Anspruch 1, **dadurch gekennzeichnet, dass** die Selbstreinigungs-Betriebsart ein fest vorgegebenes Verhältnis zwischen einem durch die Reibungsbremse aufgebrachten Verzögerungsmoment und einem durch die rekuperative Bremse aufgebrachten Verzögerungsmoment zur Verzögerung des Fahrzeugs vorgibt.

3. Verfahren nach Anspruch 1 oder 2, **dadurch gekennzeichnet, dass** das Umschaltmuster einen zeitlichen Abstand und/oder eine Anzahl von Bremsvorgängen zwischen aufeinanderfolgenden Aktivierungen der Selbstreinigungs-Betriebsart festlegt.

4. Verfahren nach einem der vorherigen Ansprüche, **dadurch gekennzeichnet, dass** in der Selbstreinigungs-Betriebsart zum Verzögern des Fahrzeugs ausschließlich die Reibungsbremse verwendet wird.

5. Verfahren nach einem der vorherigen Ansprüche, **dadurch gekennzeichnet, dass** das Umschaltmuster von Umweltbedingungen im Bereich des Fahrzeugs abhängt.

6. Verfahren nach einem der vorherigen Ansprüche, **dadurch gekennzeichnet, dass** bei dem Ermitteln des Zustands der Reibungsbremse Wetterinformationen im Bereich des Fahrzeugs, insbesondere eine Umgebungstemperatur und/oder eine Niederschlagsinformation, berücksichtigt werden.

7. Verfahren nach Anspruch 6, **dadurch gekennzeichnet, dass** die Wetterinformationen durch wenigstens einen Sensor, insbesondere einen Regensensor und/oder einen Temperatursensor und/oder einen Helligkeitssensor, des Fahrzeugs ermittelt werden.

8. Verfahren nach Anspruch 6 oder 7, **dadurch gekennzeichnet, dass** die Wetterinformationen aus Informationsquellen außerhalb des Fahrzeugs ermittelt werden, insbesondere aus dem Internet.

9. Verfahren nach einem der vorherigen Ansprüche, **dadurch gekennzeichnet, dass** es sich bei den den Zustand der Reibungsbremse beschreibenden Informationen um einen Energieeintrag über eine definierte Zeitspanne in wenigstens einen der Reibpartner der Reibungsbremse handelt.

10. Verfahren nach Anspruch 9, **dadurch gekennzeichnet, dass** die definierte Zeitspanne ab der letzten Aktivierung der Selbstreinigungs-Betriebsart bestimmt wird.

11. Verfahren nach einem der vorherigen Ansprüche, **dadurch gekennzeichnet, dass** es sich bei den den Zustand der Reibungsbremse beschreibenden Informationen um eine Fahrzeuggeschwindigkeit und/oder eine Fahrzeugverzögerung und/oder eine Steigung der Fahrbahn im Bereich des Fahrzeugs und/oder eine Zeitspanne seit der letzten Aktivierung der Selbstreinigungs-Betriebsart handelt.

12. Verfahren nach einem der vorherigen Ansprüche, **dadurch gekennzeichnet, dass** der Zustand der Reibungsbremse für die einzelnen Reibungsbremsen individuell oder achsweise ermittelt wird.

13. Verfahren nach einem der vorherigen Ansprüche, **dadurch gekennzeichnet, dass** für jede Reibungsbremse individuell, oder für die Reibungsbremsen einer Fahrzeugsachse gemeinsam geprüft wird, ob die Selbstreinigungs-Betriebsart nach dem Umschaltmuster zu aktivieren ist.

14. Verfahren nach einem der vorherigen Ansprüche, **dadurch gekennzeichnet, dass**, wenn für eine Reibungsbremse nach dem Umschaltmuster die Selbstreinigungs-Betriebsart zu aktiveren ist und der Zustand der Reibungsbremse das Umschaltkriterium nicht erfüllt, das Unterdrücken der Aktivierung der Selbstreinigungs-Betriebsart radindividuell erfolgt.

15. Verfahren nach einem der vorherigen Ansprüche, **dadurch gekennzeichnet, dass**, wenn für die Reibungsbremsen einer Fahrzeugachse nach dem Umschaltmuster die Selbstreinigungs-Betriebsart zu aktiveren ist und der Zustand der Reibungsbremsen einer Fahrzeugachse das Umschaltkriterium nicht erfüllt, das Unterdrücken der Aktivierung der Selbstreinigungs-Betriebsart achsweise erfolgt.

16. Bremssystem für ein Kraftfahrzeug, wobei das Bremssystem wenigstens eine Reibungsbremse und wenigstens eine rekuperative Bremse aufweist, wobei ein definiertes Umschaltmuster zum Umschalten zwischen einer Selbstreinigungs-Betriebsart zur Reinigung der Reibungsbremse und einer Normalbetriebsart des Bremssystems vorgegeben ist,
wobei das Bremssystem ein Steuergerät aufweist, das dazu ausgebildet ist,
•
• ein Verfahren nach Anspruch 1 durchzuführen.

## Claims

1. Method for operating a vehicle brake system,
wherein the brake system has at least one friction brake and at least one regenerative brake,
wherein a defined switching pattern is specified for switching between a self-cleaning operating mode for cleaning the friction brake and a normal operating mode of the brake system, wherein the method comprises the following steps:
• determining information describing the state of the at least one friction brake,
• determining the state of the at least one friction brake from the information,
• determining whether the state satisfies a specific switching criterion, **characterized in that**
• if the self-cleaning operating mode is to be activated according to the switching pattern and the state of the friction brake does not satisfy the switching criterion, activation of the self-cleaning operating mode is suppressed and the normal operating mode is maintained.

2. Method according to Claim 1, **characterized in that** the self-cleaning operating mode specifies a fixed relationship between a deceleration torque applied by the friction brake and a deceleration torque applied by the regenerative brake for the purpose of decelerating the vehicle.

3. Method according to Claim 1 or 2, **characterized in that** the switching pattern defines a time interval and/or a number of braking operations between successive activations of the self-cleaning operating mode.

4. Method according to any of the preceding claims, **characterized in that** only the friction brake is used to decelerate the vehicle in the self-cleaning operating mode.

5. Method according to any of the preceding claims, **characterized in that** the switching pattern depends on environmental conditions in the region of the vehicle.

6. Method according to any of the preceding claims, **characterized in that** weather information in the region of the vehicle, in particular an ambient temperature and/or precipitation information, is taken into account in determining the state of the friction brake.

7. Method according to Claim 6, **characterized in that** the weather information is determined by at least one sensor, in particular a rain sensor and/or a temperature sensor and/or a brightness sensor, of the vehicle.

8. Method according to Claim 6 or 7, **characterized in that** the weather information is determined from information sources outside the vehicle, in particular from the internet.

9. Method according to any of the preceding claims, **characterized in that** the information describing the state of the friction brake is an energy input over a defined time period into at least one of the friction partners of the friction brake.

10. Method according to Claim 9, **characterized in that** the defined time period since the last activation of the self-cleaning operating mode is determined.

11. Method according to any of the preceding claims, **characterized in that** the information describing the state of the friction brake is a vehicle speed and/or a vehicle deceleration and/or a slope of the roadway in the region of the vehicle and/or a time period since the last activation of the self-cleaning operating mode.

12. Method according to any of the preceding claims, **characterized in that** the state of the friction brake is determined individually for the individual friction brakes or axle-wise.

13. Method according to any of the preceding claims, **characterized in that** a check is made individually for each friction brake or jointly for the friction brakes on a vehicle axle whether the self-cleaning operating mode is to be activated according to the switching pattern.

14. Method according to any of the preceding claims, **characterized in that** if the self-cleaning operating mode is to be activated for a friction brake according to the switching pattern and the state of the friction brake does not satisfy the switching criterion, the suppression of the activation of the self-cleaning operating mode takes place in a wheel-specific manner.

15. Method according to any of the preceding claims, **characterized in that** if the self-cleaning operating mode is to be activated for the friction brakes on a vehicle axle according to the switching pattern and the state of the friction brakes on a vehicle axle does not satisfy the switching criterion, the suppression of the activation of the self-cleaning operating mode takes place axle-wise.

16. Brake system for a motor vehicle, wherein the brake system has at least one friction brake and at least one regenerative brake,
wherein a defined switching pattern is specified for switching between a self-cleaning operating mode for cleaning the friction brake and a normal operating mode of the brake system,
wherein the brake system has a control unit which is designed
• to carry out a method according to Claim 1.

## Revendications

1. Procédé de fonctionnement d'un système de freinage de véhicule,
le système de freinage comprenant au moins un frein à friction et au moins un frein récupératif,
un modèle de commutation défini étant prédéfini pour la commutation entre un mode de fonctionnement autonettoyant pour le nettoyage du frein à friction et un mode de fonctionnement normal du système de freinage, le procédé comprenant les étapes suivantes :
• déterminer des informations décrivant l'état dudit au moins un frein à friction,
• déterminer l'état dudit au moins un frein à friction à partir des informations,
• déterminer si l'état satisfait à un critère de commutation déterminé,
**caractérisé en ce que**
• si le mode de fonctionnement autonettoyant doit être activé selon le modèle de commutation et si l'état du frein à friction ne satisfait pas au critère de commutation, l'activation du mode de fonctionnement autonettoyant est supprimée et le mode de fonctionnement normal est maintenu.

2. Procédé selon la revendication 1, **caractérisé en ce que** le mode de fonctionnement autonettoyant impose un rapport fixe prédéterminé entre un couple de décélération appliqué par le frein à friction et un couple de décélération appliqué par le frein récupératif pour la décélération du véhicule.

3. Procédé selon la revendication 1 ou la revendication 2, **caractérisé en ce que** le modèle de commutation détermine un intervalle de temps et/ou un nombre de freinages entre des activations successives du mode autonettoyant.

4. Procédé selon l'une des revendications précédentes, **caractérisé en ce que**, dans le mode autonettoyant, seul le frein à friction est utilisé pour ralentir le véhicule.

5. Procédé selon l'une des revendications précédentes, **caractérisé en ce que** le modèle de commutation dépend des conditions environnementales régnant dans la zone du véhicule.

6. Procédé selon l'une des revendications précédentes, **caractérisé en ce que**, lors de la détermination de l'état du frein à friction, des informations météorologiques dans la zone du véhicule, notamment une information de température ambiante et/ou de précipitations, sont prises en compte.

7. Procédé selon la revendication 6, **caractérisé en ce que** les informations météorologiques sont déterminées par au moins un capteur, notamment un capteur de pluie et/ou un capteur de température et/ou un capteur de luminosité, du véhicule.

8. Procédé selon la revendication 6 ou la revendication 7, **caractérisé en ce que** les informations météorologiques sont déterminées à partir de sources d'informations extérieures au véhicule, notamment à partir d'Internet.

9. Procédé selon l'une des revendications précédentes, **caractérisé en ce que** les informations décrivant l'état du frein à friction sont un apport d'énergie sur une durée définie dans au moins un des partenaires de friction du frein à friction.

10. Procédé selon la revendication 9, **caractérisé en ce que** la période de temps définie est déterminée à partir de la dernière activation du mode de fonctionnement autonettoyant.

11. Procédé selon l'une des revendications précédentes, **caractérisé en ce que** les informations décrivant l'état du frein à friction sont une vitesse du véhicule et/ou une décélération du véhicule et/ou une pente de la chaussée au niveau du véhicule et/ou une durée depuis la dernière activation du mode autonettoyant.

12. Procédé selon l'une des revendications précédentes, **caractérisé en ce que** l'état du frein à friction est déterminé pour chaque frein à friction individuellement ou par essieu.

13. Procédé selon l'une des revendications précédentes, **caractérisé en ce que**, pour chaque frein à friction individuellement, ou pour les freins à friction d'un essieu du véhicule collectivement, il est vérifié si le mode de fonctionnement autonettoyant doit être activé selon le modèle de commutation.

14. Procédé selon l'une des revendications précédentes, **caractérisé en ce que**, lorsque le mode autonettoyant doit être activé pour un frein à friction selon le modèle de commutation et que l'état du frein à friction ne satisfait pas au critère de commutation, l'activation du mode de fonctionnement autonettoyant est supprimée roue par roue.

15. Procédé selon l'une des revendications précédentes, **caractérisé en ce que**, lorsque le mode autonettoyant doit être activé pour les freins à friction d'un essieu de véhicule selon le modèle de commutation et que l'état des freins à friction d'un essieu de véhicule ne satisfait pas au critère de commutation, l'activation du mode de fonctionnement autonettoyant est supprimée essieu par essieu.

16. Système de freinage pour un véhicule automobile, le système de freinage présentant au moins un frein à friction et au moins un frein récupératif, un modèle de commutation défini étant prédéfini pour commuter entre un mode de fonctionnement autonettoyant pour le nettoyage du frein à friction et un mode de fonctionnement normal du système de freinage,
dans lequel le système de freinage comprend un appareil de commande qui est conçu pour :
• mettre en oeuvre un procédé selon la revendication 1.
